# EUROPEAN PATENT APPLICATION

(11) **EP 2 490 425 A1**
(43) Date of publication of application: **22.08.2012**
(21) Application number: 11305169.2
(22) Date of filing: 17.02.2011
(51) Int. Cl.: H04M 3/42

(54) **Telephony switch interface**

(71) Applicant: FRANCE TELECOM, 75015 Paris (FR)
(72) Inventor: Chen, Liang, London, W4 2EQ (GB)
(74) Representative: Cabinet Plasseraud

(57) **Abstract**

The present invention relates to a method for managing incoming communications with respect to a user having a plurality of communication devices. To this end, the method comprises obtaining an input from the user by means of a user interface, the user input selecting, for each communication device of the plurality of communication devices, at least one respective status among 'active' and 'inactive' for receiving an incoming communication and providing a call manager with the statuses selected by the user input, to allow the call manager to route an incoming communication to at least one communication device of the plurality of communication devices with the 'active' status.

## Description

The present invention generally relates to communication management in a network, and particularly to communications between peers.

It finds applications, in particular while not exclusively, in telephony devices such as mobile phones.

It is nowadays common for a person to own several phones: fixed line, mobile phones, personal, work, temporary number. This is in particular the case for business users. To contact someone (hereafter called a callee) who owns a plurality of phones, a caller needs to store at least one phone number corresponding to a given callee's phone. It is also possible to store in a phonebook several phone numbers corresponding to several phones of a same person. To call a particular callee's phone, the caller needs to consult the phonebook storing a set of numbers comprising a subset of numbers referring to the same callee and to select a number from the subset.

Therefore, considering a caller who wants to join a callee and that caller's phone stores several phone numbers of the callee, the caller has to successively select in his repertory the numbers and then has to call the numbers till the callee picks up one of his phone. Furthermore, if the callee owns a new phone associated to a phone number, the caller has to store the new number in his phonebook and delete ancient phone numbers for example.

Thus, there is a need to reach a callee without calling successively the different numbers of the callee that are stored in the caller's phone.

To avoid calling successively all the numbers, the caller can also try to reach the callee on a given phone, depending on the situation. Indeed, the caller would prefer calling the work phone number of the callee during his work time. However, the caller cannot be certain that the selected phone number is the most adapted to the situation and can also not be certain that the callee will pick up the selected phone.

Therefore, there is a need for a caller to call with relative certainty the appropriate phone among a plurality of phones of a unique callee.

To address these needs, a first aspect of the invention relates to a method for managing incoming communications with respect to a user having a plurality of communication devices, the method comprising:
- obtaining an input from the user by means of a user interface, the user input selecting, for each communication device of the plurality of communication devices, at least one respective status among 'active' and 'inactive' for receiving an incoming communication;
- providing a call manager with the statuses selected by the user input, to allow the call manager to route an incoming communication to at least one communication device of the plurality of communication devices with the 'active' status.

The present invention enables advantageously a user to associate statuses to his communication devices in order to provide the call manager his preferences. On the basis of the statuses, the call manager is able to route a future communication to a communication device, which can be reachable according to the preferences defined by the user. For example, the user can activate his communication devices which are the most adapted to a present situation (a work phone during work time for example). On top of this, the preferences are stored on a remote entity located between the user and a potential caller who wants to establish a communication with the user, no matter on which communication device the communication is established. Therefore, the caller does not need to know which communication device is the most adapted to call the user and he does not need to store numbers corresponding to the plurality of communication devices given that the plurality is reachable from a remote entity, namely the call manager. The present invention thus enables to solve the problems raised by the prior art.

In one embodiment of the invention, the user input is obtained by an input of the user on one communication device of said plurality of communication devices.

This embodiment enables the user to access easily the statuses and to facilitate the updating of the statuses and requires no additional device. To this end, the communication device can be a Smartphone for example, and the method can be implemented by means of an application executed on the communication device or can be natively integrated in the functions of the communication device.

In another embodiment of the invention, the user interface is managed by a server and the statuses selected by the user input are stored and provided to the call manager by the server.

This embodiment enables to separate the means of storing the statuses and of routing the communications based on the statuses. Thus, the call manager, which can receive simultaneously a considerable number of incoming communication can focus on the routing and does not have to update the statuses, which is performed by a remote server. Alternatively, the server and the call manager could consist in the same system or device.

In still another embodiment the user input selects, for at least one communication device of the plurality of communication devices, a respective plurality of statuses, each status of said respective plurality of statuses being among 'active' and 'inactive' for receiving an incoming communication of a respective type.

Therefore, the preferences of the user can be defined in an upper dimension. Indeed, he can select statuses depending on the type of communication that is requested by a caller. The types can be for example voice calls, messages, e-mails, Short Message Services (SMS), Multimedia Messaging Services (MMS), etc.

According to another embodiment, the method further comprises the call manager receiving an incoming communication request intended to the user and routing it to at least one communication device of the plurality of communication devices with the 'active' status according to the provided statuses selected by the user input.

Thus, only the communication devices that have been previously declared 'active' by the user can be contacted to establish a communication. The present invention enables then to contact a communication device depending on preferences defined by the user and a caller does not have to care about which communication device he has to preferably contact. The only thing he has to care about is calling the user. The preferences defined by the user can also be attached to a plurality of communication types as for example voice calls, messages, SMS and MMS. Thus, the call manager takes into account the statuses selected for a given communication type depending on the type of the incoming communication request.

For example, while receiving an incoming voice call, the call manager will route it to a communication device with the 'active' status for this type of communication, namely the voice call type.

This embodiment can be similarly applied to incoming messages, such as SMS for example. Then, while receiving an incoming message, the call manager will route it to a communication device with the 'active' status for the message type.

In complement, if the selected statuses are all 'inactive', the call manager does not route the incoming communication request intended to the user to any of the communication devices of the user. For example, considering the "voice call" communication type and considering that all the selected statuses are 'inactive', the call manager will return a busy tone for an incoming 'voice call' request of a caller. In another embodiment, if the statuses corresponding to the 'voice call' communication type are all 'inactive', the call manager can, responsive to an incoming 'voice call' request from a caller, block the voice call and send a message to the caller. This message can be predefined by the user to indicate that the user in unavailable for the moment and that he will call back the caller later. A message can also be sent to the user to indicate him that he has received a voice call, which has been blocked by the call manager, from a given caller at a given date.

According to one embodiment of the invention, the method further comprises :
- obtaining a second input from the user by means of the user interface, the second user input registering a new communication device to be added to the plurality of communication devices and selecting, for the new communication device, a status among 'active' and 'inactive' for receiving an incoming communication;
- providing the call manager with an identifier of the new communication device and with the status selected by the second user input, to allow the call manager to route an incoming communication to at least the new communication device if the status of the new communication device is 'active'.

A new communication device can advantageously be added to the plurality of communication devices and this update is transparent to other users that can contact the user without knowing a new number associated to the new communication device. For example, a user having a plurality of contacts in his phonebook does not have to send a message to all his contacts to inform them that he has a new number associated with a new device.

In still another embodiment, the input from the user defines a message and the method further comprises :
- providing the call manager with the message, to allow the call manager to send the message to a caller after receiving an incoming communication if the statuses of the plurality of communication devices are 'inactive'.

This embodiment enables to specify a potential caller that the user is temporarily not reachable. The message is furthermore configurable and enables the user to attach information concerning his availability.

A second aspect of the invention relates to a system for managing incoming communications according to any one of the embodiments of the method previously described, with respect to a user having a plurality of communication devices, the system comprising:
- means for obtaining an input from the user, the user input selecting, for each communication device of the plurality of communication devices, at least one respective status among 'active' and 'inactive' for receiving an incoming communication;
- means for providing a call manager with the statuses selected by the user input, to allow the call manager to route an incoming communication to at least one communication device of the plurality of communication devices with the 'active' status.

A third aspect of the invention concerns a computer program product recorded on a storage medium and executable by a computer in the form of a software agent including at least one software module setup to implement the method according to any one of the embodiments previously described.

A fourth aspect of the invention relates to a communication device among a plurality of communication devices of a user comprising:
- a display for displaying a user interface;
- inputting means for inputting an input from the user in relation with the user interface, the user input selecting, for each communication device of a plurality of communication devices, at least one respective status among 'active' and 'inactive' for receiving an incoming communication;
- a transmitter for transmitting an external entity with the statuses selected by the user input.

A fifth aspect of the invention concerns a call manager for managing incoming communications comprising:
- a first receiver for receiving a status for each communication device of a plurality of communication devices of a user, said status being selected by the user among 'active' and 'inactive';
- a second receiver for receiving an incoming communication request intended to the user;
- a router for routing the incoming communication request to at least one communication device of the plurality of communication devices with the 'active' status by taking account of the received statuses selected by the user input.

A sixth aspect of the invention relates to a server for managing statuses comprising :
- means for obtaining a status for each communication device of a plurality of communication devices of a user, said status being selected by the user among 'active' and 'inactive';
- a storage unit for storing the obtained statuses;
- means for providing a call manager with the statuses to allow the call manager to route an incoming communication to at least one communication device of the plurality of communication devices with the 'active' status.

The present invention is illustrated by way of example, and not by way of limitation, in the figures of the accompanying drawings, in which like reference numerals refer to similar elements and in which:
- Figure 1 represents a communication network comprising a phone of a caller, a call manager and a callee owning a plurality of phones;
- Figure 2 illustrates a flowchart of the steps of a method according to one embodiment of the invention;
- Figure 3 represents a flowchart illustrating the establishment of a communication based on the configuration obtained after the steps described on Figure 2;
- Figure 4 illustrates a communication device according to one embodiment of the invention, which displays a graphical user interface to implement the steps described on Figure 2.

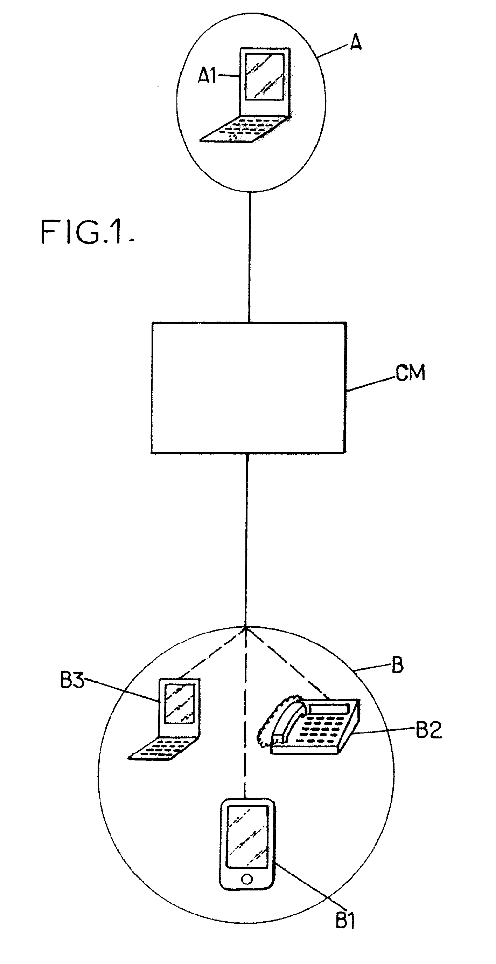

Referring to Figure 1, there is shown a system in a communication network comprising a phone A1 of a caller A, a call manager CM and a callee B owning a plurality of phones, respectively a personal phone B1, a work phone B2 and a mobile phone B3. The call manager CM is adapted to route incoming communications between phones B1, B2 and B3 and phone A1. The communications comprise for example voice calls or messages such as Short Message Service, Multimedia Messaging Service. No restriction is attached to the type of communication between the phones.

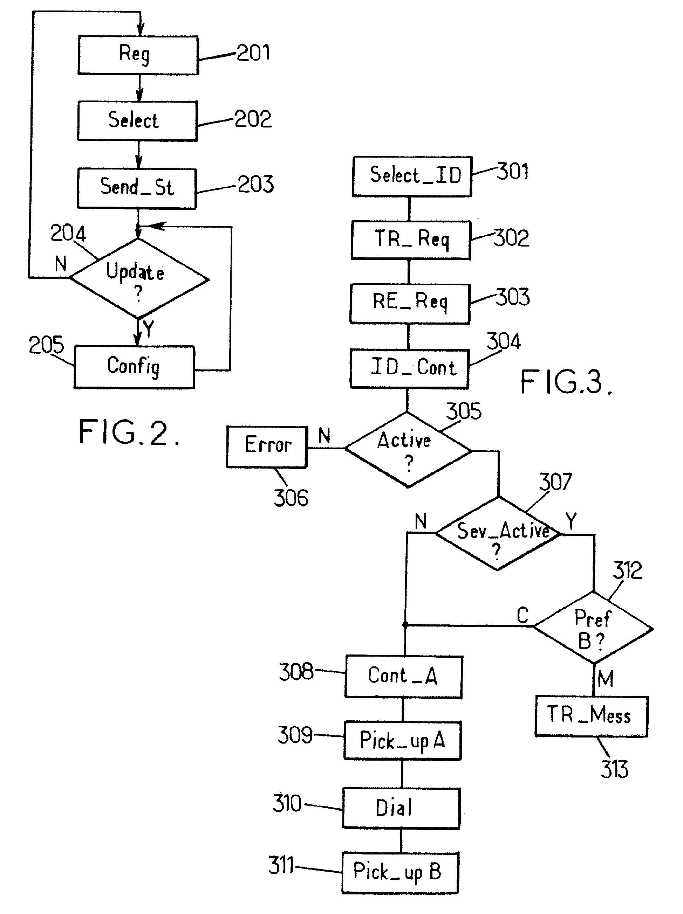

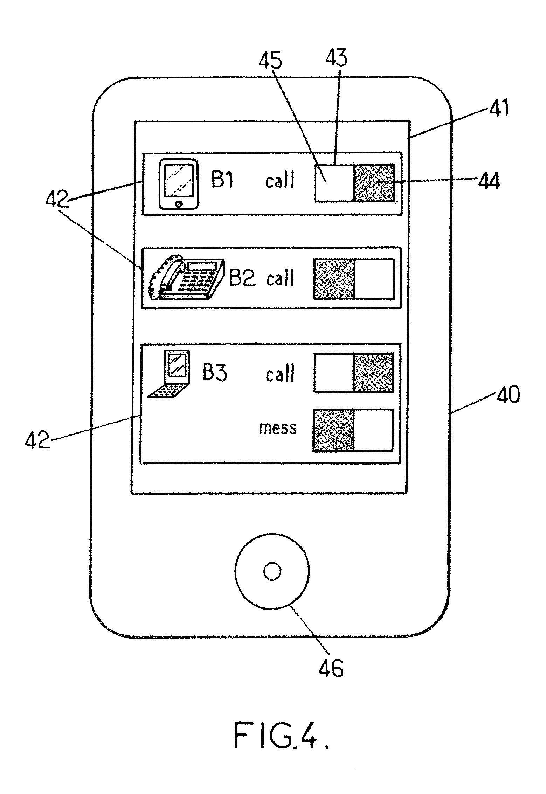

The personal phone B 1 can provide the callee B with a graphical user interface identifying the three phones B1, B2 and B3 and statuses among 'active' and 'inactive' associated to them respectively. The graphical user interface will be further described with reference to Figure 4. An 'active' status means that the callee B is reachable on the phones which are associated with such a status, whereas an 'inactive' status refers to a phone on which the callee B is temporarily not reachable. For the sake of better understanding, we now refer to Figure 2 representing a flowchart of the steps of a method according to one embodiment of the invention. Initially, the three phones B1, B2 and B3 are registered in the call manager CM and associated to respective statuses. To this end, the call manager CM can store in a database associated to the callee B an identifier of the phones B1, B2 and B3 and a status associated to each of the phones. To route the incoming communications, the database also comprises the number of the phones. The database can be identified by a unique identifier, which is specific to the callee B. Thus, the call manager CM can store a plurality of databases, each database being associated with a user of the network.

At a step 201, the callee B can register a new phone with a status 'inactive' for example. The new phone can be a fixed line with a number associated with it. The callee B transmits the new number to the call manager CM and the initial status 'inactive' so that the call manager can store the new number and the initial status in the database corresponding to callee B. The invention also covers the configuration in which the database is stored in a server, which is separate from the call manager CM. This case will be discussed later and separately.

At a step 202, callee B can select on his personal phone B1 one of the phones in order the change its status. The means employed to select the status will be described on Figure 4.

For example, considering that the phones B1, B2 and B3 have initially an "inactive" status, callee B can decide to activate phone B2, and thus selects the status 'active' for the phone B2. This situation may happen, for example, after an important meeting, during which callee B had deactivated the statuses associated with his three phones, in order not to be disturbed. After the meeting, callee B can go back to his office and thus decide to activate the phone B2, which can correspond, for example, to his work phone. Thus, callee B activates the phone on which he is the most easily reachable. Callee B can also decide to activate several phones. In another embodiment, the statuses of the phones B1, B2 and B3 can be configured and updated by means of a graphical user interface provided by a computer that accesses an on-line server, without using any one of the phones B1, B2 and B3.

After selecting the status 'active' for the phone B2, the call manager CM is provided with the 'active' status for the phone B2 at a step 203. The call manager CM can then store the updated status in the database associated with the callee B.

Callee B can thus decide at a step 204 to update again the statuses of his phones, for example because the situation has changed (he is leaving his work, he is driving). In this case, the method is reiterated at step 201. If the situation does not change temporarily, then communication parameters are considered as configured at a step 205. Callee B can decide whenever he wants to go back to step 204 in order to update again the statuses of his phones B1, B2 and B3. No restriction is attached to the order of the steps 201 and 202. For example, callee B can firstly update the statuses at step 302 and then register a new phone at a step 301.

Referring now to Figure 3, there is shown a flowchart illustrating the establishment of a communication based on the configuration obtained after the steps described on Figure 2.

In this example, caller A decides to call callee B. To this end, the phone A1 of caller A integrates a phonebook, which is adapted to store a plurality of contacts. Each contact is associated with a unique identifier which corresponds to the unique identifier previously referred to in the database of a user in the call manager CM. Thus, to call callee B, according to the invention, caller A only needs to select at a step 301 a the unique identifier of callee B in the phonebook of the phone A1. We remind that, in this example, callee B owns three phones. However, caller A only needs to store the unique identifier of callee B to reach him because of the association between the unique identifier of the callee B and the plurality of phones of statuses that is made in the call manager CM. Indeed, while selecting the identifier of callee B in his phonebook, caller A generates a communication request that is transmitted over the network to the control manager CM at a step 302 and which comprises the identifier of callee B. Thus, the step 201 described on Figure 2 is transparent to caller A and callee B does not need to provide caller A with a new number while registering a new phone number in the call manager CM.

After receiving the incoming communication request at a step 303, the call manager CM detects at a step 304 that the request is intended to callee B by associating the unique identifier with the database of callee B.

Call manager CM checks at a step 305 that at least one of the phones of callee B has a status 'active'. If this is not the case, the communication can not be established and an error message is sent at a step 306 to the phone A1 of caller A. In addition, callee B can previously specify whether a predefined or customizable message can be sent to caller A in this specific case. The call manager can then send the predefined message to caller A.

If at least one status of a phone is 'active', the call manager CM checks at a step 307 if there are several statuses that are 'active'.

If this is not the case, the call manager CM contacts at a step 308 the phone A1 of caller A, in order to establish a communication with the selected phone of callee B. By considering the configuration obtained after the steps represented on figure 2, the personal phone B2, which is the only phone having an 'active' status, is selected to establish the communication. Caller A then picks up his phone A1 at a step 309 and waits at a step 310 on the dialling tone for callee B to pick up the phone B2. Alternatively, the call manager CM can directly route the communication to the phone B2 without contacting back the phone A1 at the step 308.

If there are several phones for which the status is 'active', then preferences of callee B are consulted at a step 312. For example, all the phones with the 'active' status can be simultaneously called by going back to step 308. In this case, callee B can pick up anyone of the phones that are ringing. In another example, a landline can be privileged by going back to step 308 and a message is routed at a step 313 to the other phones with the 'active' status. Callee B can also define priorities between the phones with the 'active' status. For example, he can decide to favour one given phone, which will be contacted in priority. To this end, the graphical user interface on the phone B1 can provide options to define priorities between the phones B1, B2 and B3. The graphical user interface can also propose more than two statuses, comprising several degrees of priorities that define which phone having an 'active' status has to be contacted in priority.

It is also possible for callee B to specify whether a predefined or customizable message can be sent to the caller A in the case where callee B has deactivated all the statuses of his phones. To this end, callee B can compose a message out of a template, the message being "Sorry, I can not take your call now, I will call you back in [x] hours" for example, where [x] is customizable.

To implement the steps described previously, the phones B1 and A1 can include a mobile application that runs on mobile operating systems. In this case, the application can be launched to hook up with underlying device interfaces, such as network transmitter, sockets, etc, to communicate with the call manager CM. This option enables advantageously to be adapted to any compatible phones and piggybacks existing communication protocols supported by the telephone network. On top of this, another application, which enables to call by contact and thus to transmit a unique identifier of the callee to the call manager, can be implemented on phones B 1 and A1.

Alternatively, functions that enable to configure the statuses as explained previously can be natively integrated to the phones A1 and B1. This embodiment enables advantageously to directly implement an option "call by contact" on both phones A1 and B1, which enables a caller to directly select an identifier of a callee, without selecting a phone number.

In one embodiment of the invention, the database comprising the statuses and the plurality of phones for each user can be stored on a server which is separate from the call manager CM. In this case, while receiving an incoming communication request comprising a callee identifier from a caller, the call manager CM refers to the server in order to route the communication to a communication device with an 'active' status.

Referring now to Figure 4, there is shown a communication device 40 according to one embodiment of the invention. The communication device 40 comprises a screen 41, which is adapted to display a graphical user interface (also called user interface), and selection means 46 adapted to receive an input from a user and to browse the graphical user interface that is displayed on the screen 41. In the example described above, the communication device 40 can be identified to the personal phone B1 of the callee B. The graphical user interface comprises several zones 42, each zone 42 being attributed to each of the phones B1, B2 and B3 of the callee B. In each zone 42, a switch 43 is adapted to graphically represent the status associated with the phone in the zone 42. To this purpose, each switch 43 is divided in two subzones 44 and 45, respectively representing the 'active' status and the'inactive' status.

In this example, phone B1 has a status 'inactive' associated with the communication type 'call'. Thus, in this configuration, phone B1 is not reachable to receive a voice call.

Phone B2 has a status 'active' associated with the communication type 'call'. Thus, in this configuration, phone B2 is reachable to receive a voice call.

Phone B3 has a status 'inactive' associated with the communication type 'call'. Thus, in this configuration, phone B3 is not reachable to receive a voice call. Phone B3 has further a status 'active' associated with the communication type 'message'. Thus, in this configuration, phone B3 is reachable to receive messages, e.g. SMS and/ or MMS.

The present configuration can be updated by a user of the communication device 40 (the callee B in this example), according to the method described above. By means of the selection interface 46, the user can provide an input to select one of the switches 43 to activate or deactivate one of the phones associated with a respective communication type.

After this updating step, the selected statuses are transmitted to the call manager, which will route an incoming communication to the communication device(s) with the 'active' status.

The graphical user interface can be implemented on the communication device 40 by means of an application, which can be downloaded, can be natively integrated to the communication device 40 or can be accessed via a remote server.

In another embodiment, the graphical user interface can be provided by a computer that accesses a server online and the statuses can be selected online. The server then communicates the selected statuses to the call manager, which will route the incoming communications to the communication devices with the 'active' status.

The present invention can also be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after a conversion to another language for example. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

A person skilled in the art will readily appreciate that various parameters disclosed in the description may be modified and that various embodiments disclosed and/or claimed may be combined without departing from the scope of the invention.

## Claims

1. Method for managing incoming communications with respect to a user (B) having a plurality of communication devices (B1, B2, B3), the method comprising:
- obtaining an input from the user by means of a user interface, said user input selecting, for each communication device of said plurality of communication devices, at least one respective status among 'active' and 'inactive' for receiving an incoming communication;
- providing a call manager (CM) with the statuses selected by the user input, to allow the call manager to route an incoming communication to at least one communication device of said plurality of communication devices with the 'active' status.

2. Method according to claim 1, wherein said user input is obtained by an input of the user (B) on one communication device of said plurality of communication devices (B1, B2, B3).

3. Method according to claim 1 or 2, wherein the user interface is managed by a server and wherein the statuses selected by the user (B) input are stored and provided to the call manager (CM) by the server.

4. Method according to any one of the foregoing claims, wherein said user input selects, for at least one communication device of said plurality of communication devices (B1, B2, B3), a respective plurality of statuses, each status of said respective plurality of statuses being among 'active' and 'inactive' for receiving an incoming communication of a respective type.

5. Method according to any one of the foregoing claims, further comprising the call manager (CM) receiving an incoming communication request intended to the user and routing it to at least one communication device of said plurality of communication devices (B1, B2, B3) with the 'active' status according to the provided statuses selected by the user input.

6. Method according to claim 5, wherein if the selected statuses are all 'inactive', the call manager (CM) does not route the incoming communication request intended to the user to any of the communication devices of said user.

7. Method according to any one of the foregoing claims, further comprising :
- obtaining a second input from the user (B) by means of the user interface, said second user input registering a new communication device to be added to the plurality of communication devices (B1, B2, B3) and selecting, for said new communication device, a status among 'active' and 'inactive' for receiving an incoming communication;
- providing the call manager (CM) with an identifier of the new communication device and with the status selected by the second user input, to allow the call manager to route an incoming communication to at least the new communication device if the status of the new communication device is 'active'.

8. Method according to any one of the foregoing claims, the input from the user (B) defining a message, the method further comprising;
- providing the call manager with said message, to allow the call manager (CM) to send the message to a caller after receiving an incoming communication from the caller if the statuses of the plurality of communication devices (B1, B2, B3) are 'inactive'.

9. System for managing incoming communications according to the method as claimed in any one of the foregoing claims with respect to a user (B) having a plurality of communication devices (B1, B2, B3), the system comprising:
- means for obtaining an input from the user, said user input selecting, for each communication device of said plurality of communication devices, at least one respective status among 'active' and 'inactive' for receiving an incoming communication;
- means for providing a call manager (CM) with the statuses selected by the user input, to allow the call manager to route an incoming communication to at least one communication device of said plurality of communication devices with the 'active' status.

10. Computer program product recorded on a storage medium and executable by a computer in the form of a software agent including at least one software module setup to implement the method according to any one of claims 1 to 8.

11. Communication device among a plurality of communication devices (B1, B2, B3) of a user (B) comprising:
- a display for displaying a user interface;
- inputting means for inputting an input from the user in relation with the user interface, said user input selecting, for each communication device of a plurality of communication devices, at least one respective status among 'active' and 'inactive' for receiving an incoming communication;
- a transmitter for transmitting an external entity with the statuses selected by the user input.

12. Call manager for managing incoming communications comprising :
- a first receiver for receiving a status for each communication device of a plurality of communication devices (B1, B2, B3) of a user (B), said status being selected by the user among 'active' and 'inactive';
- a second receiver for receiving an incoming communication request intended to the user;
- a router for routing the incoming communication request to at least one communication device of said plurality of communication devices with the 'active' status by taking account of the received statuses selected by the user input.

13. Server for managing statuses comprising:
- means for obtaining a status for each communication device of a plurality of communication devices (B1, B2, B3) of a user (B), said status being selected by the user among 'active' and 'inactive';
- a storage unit for storing the obtained statuses;
- means for providing a call manager (CM) with the statuses to allow the call manager to route an incoming communication to at least one communication device of said plurality of communication devices with the 'active' status.
